# EUROPÄISCHE PATENTSCHRIFT

(11) **EP 3 752 552 B1**
(45) Veröffentlichungstag und Bekanntmachung des Hinweises auf die Patenterteilung: **18.08.2021**
(21) Anmeldenummer: 20703965.2
(22) Anmeldetag: 03.02.2020
(51) Int. Cl.: C08J 7/04

(54) **BEHÄLTNIS ZUR VERWAHRUNG EINER KÖRPERFLÜSSIGKEIT**
CONTAINER FOR STORING A BODILY FLUID
RÉCIPIENT POUR LA CONSERVATION D'UN FLUIDE CORPOREL

(30) Priorität: 01.02.2019 DE 102019102597
(43) Veröffentlichungstag der Anmeldung: 23.12.2020
(73) Patentinhaber: DC Diagnostics Concept UG (Haftungbeschränkt), 52076 Aachen (DE)
(72) Erfinder: YAGMUR, Nagle, 52076 Aachen (DE)
(74) Vertreter: Bauer, Dirk
(86) Internationale Anmeldenummer: PCT/EP2020/052615
(87) Internationale Veröffentlichungsnummer: WO 2020/157331

(56) Entgegenhaltungen:
- EP-A2- 1 243 622
- EP-B1- 1 199 104
- WO-A1-2017/201612
- WO-A2-2016/177354
- US-A- 4 260 714
- US-A- 5 300 566
- US-A1- 2006 015 057
- US-A1- 2010 145 286

## Beschreibung

### Einleitung

Die Erfindung betrifft zunächst ein Behältnis zur Verwahrung einer Körperflüssigkeit, insbesondere ein Blutentnahmeröhrchen mit einem Innenraum zur Unterbringung der Körperflüssigkeit und einer den Innenraum umschließenden Wandung, wobei eine dem Innenraum des Behältnisses zugewandte Oberfläche der Wandung eine Kontaktfläche bildet, wobei die Kontaktfläche zumindest zum Teil mit einer Primer-Beschichtung versehen ist, wobei die Primer-Beschichtung aus einem fluorierten Kopplungsmittel in Form eines Perfluorphenylazids (PFPA) mit einer Azid-Gruppe und einer funktionellen Gruppe gebildet ist.

Darüber hinaus betrifft die Erfindung ein Verfahren zur Beschichtung einer Kontaktfläche eines Behältnisses zur Verwahrung einer Körperflüssigkeit.

### Stand der Technik

Im Rahmen des diagnostischen Prozesses ermöglicht die Charakterisierung von quantitativen Biomarker-Konzentrationen und -Aktivitäten sowie Zell- und Partikelmorphologien im Blut und in anderen Körperflüssigkeiten (extravasalen Flüssigkeiten (EVF)) in Verbindung mit der Anamnese die klinische Diagnoseentscheidung. Voraussetzung für eine sichere Entscheidungsfindung ist der möglichst hohe Grad der präanalytischen Stabilisierung von Blut und EVF nach der Entnahme aus dem Blutgefäß sowie eine ex-vivo-Lagerung bis zur Analytik. Gegenwärtig werden entnommene Proben von einer Körperflüssigkeit bis zur eigentlichen Analyse in Glas- oder Plastikröhrchen, meist aus Polypropylen (PP), verwahrt. Hierbei kommt es nach dem Verlassen der Körperflüssigkeiten aus dem Patientenkörper zu zahlreichen Veränderungsprozessen bei allen Bestandteilen dieser Flüssigkeiten, insbesondere des Blutes. In den Röhrchen kommt es durch den Kontakt der entnommenen Körperflüssigkeit mit der Wandung des Röhrchens unter anderem zur Proteinadsorption, Zelladhäsionen und zur Gerinnung der Körperflüssigkeit. Zur Stabilisierung ihrer zahlreichen und unterschiedlichen Bestandteile, deren Konzentrationen und Aktivitäten (z.B. in Blut) besteht die übliche Vorgehensweise in der Hinzugabe von Additiven wie EDTA, Citrat oder Heparin in das Röhrchen. Allerdings eignet sich nicht jedes Additiv für jeden Biomarker, sodass der behandelnde Arzt in Abhängigkeit der vermuteten Krankheit ein spezielles Röhrchen wählen muss. Weiterhin sind die Verweildauer, die Temperaturbeständigkeit oder auch die Lichtexpositionsdauer in den Behältnissen stark begrenzt und können bei einer Überschreitung ebenfalls zu falschen Analyseresultaten führen. Zusätzlich können die Additive wie EDTA, Citrat oder Heparin lediglich die Blutgerinnung hemmen. Zahlreiche andere Aspekte des Degradationsprozesses werden nicht verhindert.

Ein Behältnis zur Verwahrung einer Körperflüssigkeit geht aus der Patentanmeldung EP 1 199 104 B1 hervor. Hier wird ein Blutentnahmeröhrchen aus Polypropylen offenbart, das die Adhäsion von Blutbestandteilen an der Kontaktfläche des Blutentnahmeröhrchens verringert. Geeignete Beschichtungsmaterialien sind die hydrophilen Polymere Polyvinylalkohol, Polyvinylacetat, Polyvinylpyrrolidon (PVP), Polystyrolsulfonat und Copolymere sowie Kombinationen davon. Die hydrophilen Polymere werden mittels Sprüh- oder Dipverfahren auf die Innenseite der Blutentnahmeröhrchen aufgebracht und nach einer anschließenden Luft- oder Ofentrocknung mittels Strahlung vernetzt. Zusätzlich können die Blutentnahmeröhrchen Additive enthalten, welche die Gerinnung von Blut fördern oder hemmen.

Aus dem Patent US 5,830,539 geht ein Verfahren zur Funktionalisierung und Beschichtung eines Substrats hervor. Die Beschichtung soll sich dazu eignen, die Biokompatibilität des Substrats zu erhöhen. Hierbei wird ein erstes funktionalisierendes Reagenz auf das Substrat aufgebracht, wodurch mittels Nitren-Addition eine kovalente Bindung an das Substrat bewirkt werden soll. Das erste funktionalisierende Reagenz weist hierzu eine Azid-Gruppe und eine erste funktionalisierende Gruppe, beispielsweise einen Aktivester, auf, wobei die Azid-Gruppe dazu vorgesehen ist, mit dem Substrat zu reagieren während die erste funktionalisierende Gruppe die Bindung eines zweiten funktionalisierenden Reagenzes an das erste funktionalisierende Reagenz ermöglichen soll. Das zweite funktionalisierende Reagenz weist ebenfalls eine funktionalisierende Gruppe auf, die an das Substrat gebunden werden soll, beispielsweise Enzyme, Antikörper, Diagnostika oder therapeutische Wirkstoffe. Das auf diese Weise beschichtete Substrat soll mithin bewirken, dass biologische und körpereigene Substanzen wie Enzyme, Hormone, Antikörper, Nukleinsäure, Peptide oder Aminosäuren gebunden werden. Als bevorzugte funktionalisierende Reagenzien werden N-Hydroxysuccinimid-Aktivester-funktionalisierte Perfluorophenyl Azide (NHS-PFPAs) vorgesehen.

Als nachteilig an den bekannten Behältnissen hat sich jedoch herausgestellt, dass eine Derivatisierung des Perfluorophenylazids mittels NHS aufgrund einer Feuchtigkeitsempfindlichkeit des NHS eher ungeeignet ist für den Einsatz in flüssigen Medien, insbesondere Blut und EVF. Insbesondere erfordert ein derartig derivatisiertes Perfluorophenylazid eine geeignete Stabilisierung.

### Aufgabe

Es ist Aufgabe der vorliegenden Erfindung, ein alternatives Behältnis zur Verwahrung einer Körperflüssigkeit zu entwickeln, welches sich durch eine Primer-Beschichtung auszeichnet, durch welche die Bindung einer zweiten Beschichtung an die Kontaktfläche des Behältnisses verbessert wird.

Diese Aufgabe soll analog für das erfindungsgemäße Verfahren erfüllt werden.

### Lösung

Ausgehend von dem eingangs genannten Behältnis zur Verwahrung einer Körperflüssigkeit wird die vorstehende Aufgabe dadurch gelöst, dass ein Copolymer aus Poly(N-Vinylamin-co-N-vinyl Acetamid) an der funktionellen Gruppe der Primer-Beschichtung angebunden ist.

Im Hinblick auf die hydrophoben Eigenschaften von Kontaktflächen, die mit Blut oder extravasalen Flüssigkeiten in Kontakt kommen, ist eine derartige Beschichtung besonders vorteilhaft. Dies liegt darin begründet, dass sich typische Kontaktflächen, beispielsweise solche aus Polypropylen, zwar aufgrund ihrer chemisch inerten Eigenschaften gut als Material für ein Blutentnahmeröhrchen eignen, jedoch durch die Hydrophobie des Stoffes bei der Beschichtung des selbigen zu Schwierigkeiten führen. Insbesondere wird ein Auftragen von wässrigen Lösungen und Stoffen dahingehend erschwert, dass eine vollständige Benetzung der Oberfläche unterbleibt. Eine Bindung von wasserbasierten, chemischen Stoffen, welche die Degradationsprozesse von Blut und weiteren Körperflüssigkeiten verhindern, wird mithin gehemmt.

Phenylazide gehören aufgrund ihrer hohen Reaktionseffizienz, schnellen Kinetik, ausgezeichneten Lagerstabilität und einfachen Zubereitung zu den am besten bestätigten Kopplungsmitteln. Dabei fungiert ein fluoriertes Phenylazid, insbesondere Perfluorphenylazid (PFPA), als heterobifunktioneller Crosslinker. Das Perfluorphenylazid ist ein photoaffines Kopplungsreagenz, welches eine Oberflächenmodifizierung als auch eine Polymervernetzung bzw. -anbindung ermöglicht. Das Perfluorphenylazid wurde hierbei mittels Derivatisierung von Pentafluorbenzoesäuremethylester unter Hinzugabe von Natriumazid (NaN₃) hergestellt. Da Perfluorphenylazid mit seiner funktionellen Gruppe mit Kohlenstoff-Wasserstoff-, Ammonium-Wasserstoff- oder Kohlenstoff-Kohlenstoff-Bindungen reagiert, ist eine Kopplung auf ein breites Spektrum von Molekülen und Materialien effizient und hochgradig reproduzierbar anwendbar und daher sehr vielseitig.

Das Perfluorphenylazid wirkt aufgrund seiner attraktiven heterobifunktionellen Eigenschaften somit als Haftvermittler wie auch als Kopplungsmittel für eine Kontaktfläche eines Behältnisses und eine zweite Beschichtung. Das fluorierte Phenylazid ist in der Lage einerseits mit seiner Azid-Gruppe eine stabile kovalente Verbindung mit der Röhrenwand zu bilden. Andererseits erlaubt die substratreaktive funktionelle Gruppe "-R" des fluorierten Phenylazids die maßgeschneiderte Anbindung eines statistischen Copolymers, wobei das Copolymer erfindungsgemäß aus Poly(N-Vinylamin-co-N-vinyl Acetamid) besteht. Das Perfluorphenylazid wird dabei im Gegensatz zu bekannten Primer-Beschichtungen nicht weiter derivatisiert.

Ein besonderer Vorteil des erfindungsgemäßen Behältnisses besteht demnach in der Fähigkeit der Primer-Beschichtung, sich einerseits an die Kontaktfläche des Behältnisses zu binden und darüber hinaus eine Bindungsmöglichkeit für eine weitere Beschichtung zu bilden, durch welche die Veränderungsprozesse auf die Bestandteile des Blutes oder die extravasalen Körperflüssigkeiten verhindert werden. In Gesamtzusammenschau erlaubt die Reaktivität des Perfluorphenylazids und seiner funktionellen Gruppe, Kopplungsreaktionen selektiv und sequenziell durchzuführen und dabei Moleküle oder Oberflächenmaterialien unterschiedlicher Natur zusammenzubringen. Dabei wirkt die erfindungsgemäße Primer-Beschichtung im Gegensatz zu den bekannten Primer-Beschichtungen dadurch, dass ein Anbinden von biologischen und körpereigenen Substanzen gerade unterbunden werden soll, um jegliche Adhäsion oder Adsorption von biologischen und körpereigenen Substanzen zu verhindern.

Die Bindung des Perfluorphenylazids an die Kontaktfläche des Blutentnahmeröhrchens ist hierbei insbesondere mittels der Azid-Gruppe des Perfluorphenylazids möglich, welche mittels einer geeigneten Behandlung der selbigen derart aktiviert wird, dass eine irreversible, chemische Bindung mit der Oberfläche des Behältnisses bildbar ist. Darüber hinaus werden die Aminogruppen des Copolymers in einer chemischen Reaktion säurehydrolisiert. Unter Hinzugabe eines geeigneten chemischen Stoffes können die Aminogruppen des Copolymers derart funktionalisiert werden, dass die selbigen als ortsselektive Bindungsstellen, sozusagen Ankerpunkte, für eine zweite Beschichtung bereitstehen. Die zweite Schicht kann somit vorteilhafterweise besonders einfach auf die vorherige Primer-Beschichtung aufgetragen werden, ohne dass es hierbei zu Schwierigkeiten im Hinblick auf die Benetzung des Stoffes auf der Kontaktfläche des Behältnisses kommt. Insgesamt kann somit eine dauerhafte Bindung der zweiten Beschichtung an die inerte Wandung des Behältnisses erzielt werden.

Die erfindungsgemäße Primer-Beschichtung ist insbesondere dadurch besonders vorteilhaft, dass der funktionelle Rest des Perfluorphenylazids aus einem statistischen Copolymer, nämlich Poly(N-Vinylamin-co-N-vinyl Acetamid), gebildet ist. In Versuchen hat sich herausgestellt, dass ein derartiges Copolymer besonders dazu geeignet ist, den Phenylring des Perfluorphenylazids zu stabilisieren und eine übersteigerte Elektrophilie des Perfluorphenylazids zu hemmen, sodass ungewollte chemische Reaktionen des Perfluorphenylazids eingedämmt werden. Dabei hat das Polyamidpolymer selbst keine Interaktion mit dem Blut oder der extravasalen Flüssigkeit.

Gemäß einer vorzugsweisen Ausgestaltung des Behältnisses ist vorgesehen, dass das Behältnis aus einem Kunststoff, vorzugsweise Polypropylen, Polystyrol, Polyethylen, Polymethylmethacrylat, Polyimid, oder aus Glas gebildet ist. Die vorstehend genannten Materialien werden typischerweise im Bereich der Medizin verwendet und haben sich bislang aufgrund ihrer geringen Herstellungskosten insbesondere zur Herstellung von Einmalprodukten bewährt.

Eine bevorzugte Ausgestaltung der Erfindung sieht vor, dass das Behältnis eine zweite Beschichtung, umfassend PEG/PEO-PPO-Copolymere, Poly-(3-Methacryloylaminopropyl)-(2-Carboxyethyl)-Dimethylmmonium-Carboxybetain-Methylacrylamid (pCBMAA-1) oder Polypeptid-basierte Blockcopolypeptide, aufweist, wobei die zweite Beschichtung mit der Primer-Beschichtung verbunden ist.

Die zweite Beschichtung tritt zwar direkt mit dem Blut oder der extravasalen Flüssigkeit in Kontakt, bewirkt jedoch keine chemische Reaktion. Vorteilhafter Weise kann hierdurch verhindert werden, dass die zu untersuchende Körperflüssigkeit vor einer Laboranalyse verändert wird und in Quantität und Qualität gegenüber der realen Zusammensetzung im Blut oder in der Körperflüssigkeit abweicht.

Das PEG/PEO-PPO-Copolymer ist vorzugsweise zusammengesetzt aus einem sternförmigen, 6-Arm Polyethylenglycol oder -ethylenoxid (PEG oder PEO) mit einer spezifischen Propylenoxid (PPO)-Modifikation zur Verhinderung der Kristallisation des Polymers. Gemäß einer vorzugsweisen Ausgestaltung der Erfindung ist hierbei vorgesehen, dass das Copolymer mittels seiner Isozyanatgruppen an die Amino-Gruppen der Primer-Beschichtung bindbar ist.

Poly-(3-Methacryloylaminopropyl)-(2-Carboxyethyl)-Dimethylmmonium-Carboxybetain-Methylacrylamid (pCBMAA-1) ist elektrisch neutral, zwitterionisch und kosmotrop. Die Bindung mit der Primer-Beschichtung erfolgt mittels einer radikalischen Polymerisation. Vorzugsweise wird hierbei die Elektronentransferreaktion (SET-LRP, Single-Electron Transfer Living Radical Polymerization) genutzt.

Die Polypeptid-basierten Blockcopolypeptide werden mittels rekombinanter DNA-Technologie hergestellt. Vorzugsweise sind diese zusammengesetzt aus elektrisch neutralen und proteinabweisenden Elastin-Polypeptid-Konstrukten. Die Polypeptidkonstrukte sind elektrisch geladen und bewirken je nach Ladungsselektivität die Anbindung des Konstrukts an die Primer-Beschichtung (negative Ladung) oder an Plasma-behandelte Oberflächen (positive Ladung). Ebenso sind zwitterionische Polypeptid-basierte Blockcopolypeptide, elektrisch neutrale Konstrukte, vorstellbar.

Vorzugsweise weist das Behältnis einen Verschlussdeckel oder eine Verschlusskappe vorzugsweise bestehend aus Polyethylen (PE) auf, um die Körperflüssigkeit luftdicht in dem Behältnis zu verschließen. Vorstellbar ist auch, dass die Verschlusskappe eine Membran besitzt, welche mittels einer Nadeln durchstochen werden kann, um die Körperflüssigkeit in das Behältnis einzulassen. Für den Fall einer Blutentnahme aus einer Patientenvene ist das Behältnis vorzugsweise evakuiert. Hierdurch kann das Blut nach dem Einstechen einer Nadel, welche über einen Schlauch mit der in das Behältnis eingeführten Nadel verbunden ist, in die Vene des Patienten mittels des Unterdrucks in das Behältnis gesogen werden. Alternativ besitzt das Behältnis eine im Innenraum angeordnete Kolbenstange mit einem Kolben, um die Körperflüssigkeit mittels einer Bewegung der selbigen in das Behältnis einzusaugen. Vorzugsweise ist der Verschlussdeckel aus Polyethylen (PE) und die Kolbenstange aus Polysytrol (PS) ausgebildet.

In einer bevorzugten Ausgestaltung des erfindungsgemäßen Behältnisses ist der Verschlussdeckel ebenfalls mit der zweiten Beschichtung versehen. Gleiches gilt für einen vorstehenden Kolben.

Die eingangs genannte Aufgabe wird ausgehend von einem Verfahren zur Beschichtung einer Kontaktfläche eines Behältnisses zur Verwahrung einer Körperflüssigkeit durch zwei Verfahrensschritte gelöst. Ein erster Verfahrensschritt beinhaltet ein Auftragen eines Perfluorphenylazids mit einer Azid-Gruppe und einer funktionellen Gruppe, auf die Kontaktfläche des Behältnisses, wobei die Primer-Beschichtung aus einem Perfluorphenylazid (PFPA) mit einer Azid-Gruppe und einer funktionellen Gruppe gebildet ist. Ein zweiter Verfahrensschritt umfasst eine Behandlung des Perfluorphenylazids, wodurch die Azid-Gruppe des Perfluorphenylazids mit der Kontaktfläche des Behältnisses bindet, wodurch eine untrennbar mit der Kontaktfläche verbundene Beschichtung erzeugt wird.

Vergleichbar zum erfindungsgemäßen Behältnis liegt ein Vorteil des Verfahrens darin, dass eine Primer-Beschichtung geschaffen wird, welche sich besonders gut zur Bindung einer zweiten Beschichtung eignet. Dabei verhindert die zweite Beschichtung die ungewollten Veränderungsprozesse der Körperflüssigkeiten in dem Behältnis. Dieses Verhalten ist insoweit wünschenswert, als dass darin die Voraussetzung dafür geschaffen wird, eine hohe Stabilisierung der Körperflüssigkeit in dem Behältnis zu sichern und somit die richtige klinische Entscheidung (Diagnose- oder Therapieentscheidung) treffen zu können.

Vorzugsweise ist ein Aktivierungsschritt zur Verbesserung der Anhaftung der Primer-Beschichtung auf der Kontaktfläche des Behältnisses, wobei der Aktivierungsschritt vorzugsweise vor dem ersten Verfahrensschritt erfolgt und/oder ein Aktivierungsschritt zur Verbesserung der Anhaftung der zweiten Beschichtung auf der Primer-Beschichtung, wobei der Aktivierungsschritt vorzugsweise nach dem zweiten Verfahrensschritt erfolgt, vorgesehen.

Vorzugsweise erfolgt mindestens ein Aktivierungsschritt mittels UV-Strahlung oder mittels einer Plasmabehandlung, wobei das Plasma aus einem Edelgas, vorzugsweise aus Argon, oder aus Sauerstoff gebildet ist. Die Plasmabehandlung bewirkt einen kontrollierten Abbau der äußersten Schicht des Polypropylens. Folge ist ein negatives Zeta-Potential, welches die Haftung der Primer-Beschichtung zusätzlich verbessert. Dieses Verhalten ist insoweit wünschenswert, als hierdurch die Konzentration des Perfluorophenyls in der aufzutragenden Lösung verringert werden kann.

Es hat sich herausgestellt, dass Polypeptid-basierte Blockcopolypeptide bestehend aus einem Elastin-Polypeptid-Konstrukt mit einem elektrisch positiv geladenen Polypetid besonders gut an eine plasmabehandelte Schicht binden. Gleiches gilt für zwitterionische Polypeptid-basierte Blockcopolypeptide mit elektrisch positiv geladenen Polypeptid-Komponenten. Polypeptid-basierte Blockcopolypeptide bestehend aus einem Elastin-Polypeptid-Konstrukt mit einem elektrisch negativ geladenen Polypetid binden hingegen besonders gut an die Primer-Beschichtung.

Weiterhin werden durch die Plasmabehandlung nukleophile Gruppen gebildet, welche im Hinblick auf die zweite Beschichtung besonders vorteilhaft sind. Dies führt dazu, dass die zweite Beschichtung hierdurch besonders gut ohne eine vorherige Primer-Beschichtung an die Kontaktfläche des Behältnisses binden kann.

Vorzugsweise erfolgt der erste Verfahrensschritt durch Einlassen des Perfluorphenylazids in das Behältnis oder durch Einsprühen des Perfluorphenylazids in das Behältnis.

Die chemischen Stoffe liegen entweder in flüssiger Form vor oder können aufgrund ihrer Wasserlöslichkeit zu einer wässrigen Lösung verarbeitet werden. Vorzugsweise wird die Kontaktfläche des Behältnisses durch ein Einfüllen der chemischen Stoffe in das Behältnis mit dem jeweiligen Stoff benetzt. Überschüssige Flüssigkeitsanteile werden anschließend durch ein Ausgießen der selbigen aus dem Behältnis entfernt. Vorstellbar ist auch, dass die Kontaktfläche mittels eines Sprühverfahrens mit dem chemischen Stoff versehen wird. In jedem Fall wird sichergestellt, dass die Kontaktfläche des Behältnisses vollständig mit dem chemischen Stoff benetzt wird.

Eine bevorzugte Ausgestaltung des erfindungsgemäßen Verfahrens sieht vor, dass der zweite Verfahrensschritt mittels energetischen Strahlen, vorzugsweise mittels UV-Strahlen, Laserstrahlen oder Elektronenstrahlen erfolgt.

Hierbei wird die Bindung zwischen der Primer-Beschichtung und der zu beschichtenden Wandung des Behältnisses unter Funktionalisierung der Azid-Gruppe mittels UV-Bestrahlung initiiert. Bei Aktivierung der Azid-Gruppe durch UV-Bestrahlung bildet die Azid-Gruppe an einer Bindungsstelle zur Wandung des Behältnisses kovalente Bindungen aus. Die Azid-Gruppe liefert bei der Photoaktivierung ein hochreaktives radikales Zwischenprodukt, das anschließend mit den benachbarten Oberflächenmolekülen stabile kovalente Bindungen eingehen kann.

Die in Bezug auf das erfindungsgemäße Behältnis genannten Vorteile werden analog mittels des vorbeschriebenen Verfahrens erzielt.

Gemäß der vorliegenden Erfindung (nicht beansprucht) kann auch vorgesehen sein, dass die zweite Beschichtung ohne eine vorherige Primer-Beschichtung auf die Kontaktfläche des Behältnisses aufgebracht und an diese gebunden wird. In einer solchen Ausgestaltung kann die Bindung durch eine Plasmabehandlung der Kontaktfläche verbessert werden. In jedem Fall kommt es bei Kontakt einer der vorstehenden Stoffe mit der Kontaktfläche des Behältnisses zur Bildung negativ geladener, nukleophiler Gruppen, wodurch eine stabile Bindung mit der Kontaktfläche eingegangen wird.

Mittels einer direkten Anbindung der zweiten Beschichtung an die Kontaktfläche des Behältnisses kann das Behältnisses vorteilhafter Weise in einem einzigen Schritt beschichtet werden. Auch können Kosten zur Herstellung eines solchen Behältnisses eingespart werden. Die Erfindung besteht in diesem Fall aus einem Behältnis, zur Verwahrung einer Körperflüssigkeit, insbesondere ein Blutentnahmeröhrchen, mit einem Innenraum zur Unterbringung der Körperflüssigkeit und einer den Innenraum umschließenden Wandung, wobei eine dem Innenraum des Behältnisses zugewandte Oberfläche der Wandung eine Kontaktfläche bildet, wobei die Kontaktfläche zumindest zum Teil mit einer Beschichtung versehen ist, das dadurch gekennzeichnet ist, dass die Beschichtung
a. PEG/PEO-PPO-Copolymere, oder
b. Poly-(3-Methacryloylaminopropyl)-(2-Carboxyethyl)-Dimethylmmonium-Carboxybetain-Methylacrylamid (pCBMAA-1) oder
c. Polypeptid-basierte Blockcopolypeptide
umfasst.

### Ausführungsbeispiel:

Die vorstehend beschriebene Erfindung wird nachfolgend anhand von Ausführungsbeispielen, die in den Figuren dargestellt sind, näher erläutert.

Es zeigt:
- Figur 1:: eine dreidimensionale Ansicht eines erfindungsgemäßen Blutentnahmeröhrchens,
- Figur 2:: einen Vertikalschnitt durch das Blutentnahmeröhrchen aus Figur 1 und
- Figur 3:: eine Strukturformel einer Primer-Beschichtung.

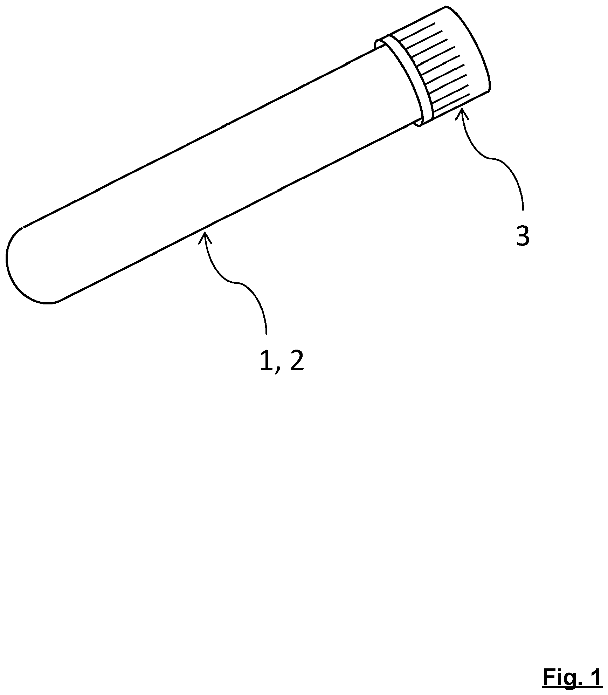

Figur 1 zeigt ein erstes erfindungsgemäßes Behältnis 1 in Form eines Blutentnahmeröhrchens 2 zur Verwahrung einer Blutprobe eines Patienten, das aus Polypropylen hergestellt und mit einer Primer-Beschichtung und einer zweiten Beschichtung zur Stabilisierung der Blutprobe versehen ist. Das Blutentnahmeröhrchen 2 ist zudem an einem Ende mit einem Verschlussdeckel 3 versehen. Mittels des Verschlussdeckels 3 wird ein luftdichtes Verschließen des Blutentnahmeröhrchens 2 bewirkt, um eine sichere Verwahrung zu gewährleisten und mögliche Interaktionen des Bluts mit der Umgebung zu verhindern.

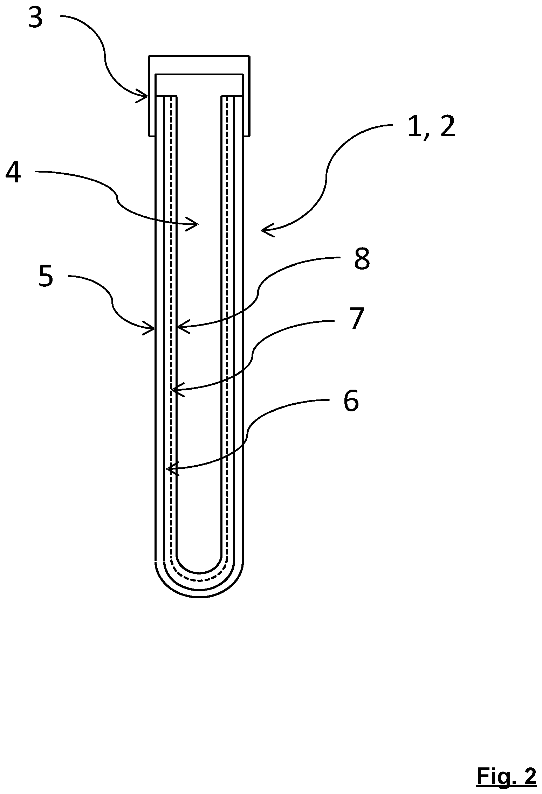

Figur 2 zeigt einen vertikalen Querschnitt durch das in Figur 1 gezeigte Blutentnahmeröhrchen 2. Eine einem Innenraum 4 zugewandte Wandung 5 des Blutentnahmeröhrchens 2 bildet eine Kontaktfläche 6 zwischen dem Blut und der Wandung 5 des Blutentnahmeröhrchens 2. Die Kontaktfläche 6 ist mit einer Primer-Beschichtung 7 bestehend aus einem Perfluorphenylazid (PFPA) mit einer Azid-Gruppe 9 und einer funktionellen Gruppe 10 versehen, wobei an der funktionellen Gruppe 10 ein Copolymer aus Poly(N-Vinylamin-co-N-vinyl Acetamid) angebunden ist. Weiterhin weist das Blutentnahmeröhrchen 2 eine zweite Beschichtung 8 auf, welche an die Primer-Beschichtung 7 angrenzt und mit dieser verbunden ist.

Um das Perfluorphenylazid gemäß des ersten Verfahrensschritts auf die Kontaktfläche 6 des Blutentnahmeröhrchens 2 aufzutragen, wird das selbige als wässrige Lösung mit einer Konzentration von 5 - 10 mg/mL in das Blutentnahmeröhrchen 2 gegeben. Es versteht sich, dass das Perfluorphenylazid auch in anderen Konzentrationen in der Lösung vorliegen kann. In jedem Fall benetzt die Lösung aufgrund der hohen Affinität des Perfluorphenylazids zu Polypropylen, welche durch die Hydrophobie des Perfluophenylazids gegeben ist, die Kontaktfläche 6 des Blutentnahmeröhrchen 2. Verbleibende Anteile des Perfluorphenylazids, welche sich als Flüssigkeitsüberschuss in dem Blutentnahmeröhrchen 2 ansammeln, werden aus dem Blutentnahmeröhrchen 2 entfernt.

In dem zweiten Verfahrensschritt wird die aufgetragene Lösung mittels UV-Strahlung an das Blutentnahmeröhrchen 2 gebunden. Hierbei wird das Perfluophenylazid derart aktiviert, die Azid-Gruppen 9 des selbigen irreversibel mit der Kontaktfläche 6 des Behältnisses 1 binden. Dies ist insbesondere durch die Radikalisierung des N₃ zu N° möglich. In einer chemischen Reaktion werden die Formamidgruppen des Copolymers säurehydrolysiert.

Anschließend wird die zweite Beschichtung 8 auf das Blutentnahmeröhrchen 2 aufgetragen. Die Beschichtung besteht aus PEG-PPO-Blockcopolymeren. Das PEG-PPO-Copolymer ist zusammengesetzt aus einem 6-Arm, sternförmigen Polyethylenglycol (PEG) und einer spezifischen Propylenoxid (PPO)-Modifikation zur Verhinderung der Kristallisation des Polymers. Das Copolymer liegt ebenfalls als wässrige Lösung vor. Das Auftragen des Copolymers erfolgt analog zum ersten Verfahrensschritt. Hierbei binden die Isozyanatgruppen des PEG-PPO-Copolymers an eine Amino-Gruppe 13 der Primer-Beschichtung 7. Zur Stärkung dieser Bindung erfolgt eine weitere Behandlung der innenliegenden Wandung 5 des Blutentnahmeröhrchens 2 mit UV-Strahlung. Vorstellbar ist ebenso, dass die Stärkung mittels einer Plasmabehandlung erfolgt.

Die Schichtdicken der in der Figur 2 gezeigten Beschichtungen 7, 8 sind zur besseren Übersicht überhöht, und damit nicht maßstabsgetreu, dargestellt.

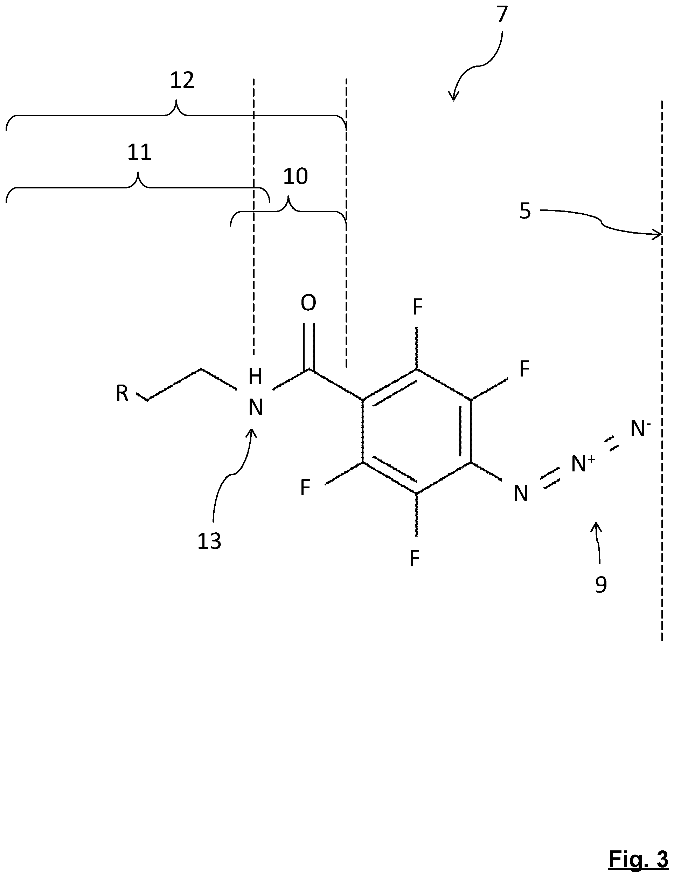

Figur 3 zeigt eine Strukturformel der Primer-Beschichtung 7, umfassend die Azid-Gruppe 9 und die funktionelle Gruppe 10. Dabei bindet die Azid-Gruppe 9 des Perfluorphenylazids an die Wandung 5 des Behältnisses 1. An der funktionellen Gruppe 10 des Perfluorphenylazids ist das Copolymer 11 Poly(N-Vinylamin-co-N-vinyl Acetamid) angebunden, sodass ein funktioneller Rest 12 des Perfluorphenylazids das Copolymer 11 umfasst. Eine Amino-Gruppe 13, welche von dem Copolymer 11 bereitgestellt wird, dient hierbei als Ankerpunkt für die zweite Beschichtung 8.

### Bezugszeichenliste:

- 1: Behältnis
- 2: Blutentnahmeröhrchen
- 3: Verschlussdeckel
- 4: Innenraum
- 5: Wandung
- 6: Kontaktfläche
- 7: Primer-Beschichtung
- 8: zweite Beschichtung
- 9: Azid-Gruppe
- 10: funktionelle Gruppe
- 11: Copolymer
- 12: funktioneller Rest
- 13: Amino-Gruppe

## Patentansprüche

1. Behältnis (1) zur Verwahrung einer Körperflüssigkeit, insbesondere ein Blutentnahmeröhrchen (2), mit einem Innenraum (4) zur Unterbringung der Körperflüssigkeit und einer den Innenraum (4) umschließenden Wandung (5), wobei eine dem Innenraum (4) des Behältnisses (1) zugewandte Oberfläche der Wandung (5) eine Kontaktfläche (6) bildet, wobei die Kontaktfläche (6) zumindest zum Teil mit einer Primer-Beschichtung (7) versehen ist, wobei die Primer-Beschichtung (7) aus einem Perfluorphenylazid (PFPA) mit einer Azid-Gruppe (9) und einer funktionellen Gruppe (10) gebildet ist,
**dadurch gekennzeichnet, dass**
ein Copolymer aus Poly(N-Vinylamin-co-N-vinyl Acetamid) an der funktionellen Gruppe (10) der Primer-Beschichtung (7) angebunden ist.

2. Behältnis (1) nach Anspruch 1, **dadurch gekennzeichnet, dass** das Behältnis (1) aus einem Kunststoff, vorzugsweise Polypropylen (PP), Polystyrol (PS), Polyethylen (PE), Polymethylmethacrylat (PMMA), Polyimid (PI), oder aus Glas gebildet ist.

3. Behältnis nach Anspruch 1 oder 2, **gekennzeichnet durch** eine zweite Beschichtung (8), umfassend
a. PEG/PEO-PPO-Copolymeren,
b. Poly-(3-Methacryloylaminopropyl)-(2-Carboxyethyl)-Dimethylmmonium-Carboxybetain-Methylacrylamid (pCBMAA-1) oder
c. Polypeptid-basierte Blockcopolypeptiden,
wobei die zweite Beschichtung (8) mit der Primer-Beschichtung (7) verbunden ist.

4. Verfahren zur Beschichtung einer Kontaktfläche (6) eines Behältnisses (1) zur Verwahrung einer Körperflüssigkeit **gekennzeichnet durch** die folgenden Verfahrensschritte:
a. Auftragen einer Primer-Beschichtung gebildet aus einem Perfluorphenylazid (PFPA) mit einer Azid-Gruppe (9) und einer funktionellen Gruppe (10) auf die Kontaktfläche (6) des Behältnisses (1), wobei ein Copolymer aus Poly(N-Vinylamin-co-N-vinyl Acetamid) an der funktionellen Gruppe (10) der Primer-Beschichtung (7) angebunden ist,
b. Behandlung der gemäß Verfahrensschritt a. aufgetragenen Primer-Beschichtung, wodurch die Azid-Gruppe (9) des Perfluorphenylazids mit der Kontaktfläche (6) des Behältnisses (1) bindet, wodurch eine untrennbar mit der Kontaktfläche (6) verbundene Beschichtung (7) erzeugt wird.

5. Verfahren nach Anspruch 4 **gekennzeichnet durch** einen Aktivierungsschritt zur Verbesserung der Anhaftung der Primer-Beschichtung (7) auf der Kontaktfläche (6) des Behältnisses (1), wobei der Aktivierungsschritt vorzugsweise vor dem Verfahrensschritt a. erfolgt und/oder durch einen Aktivierungsschritt zur Verbesserung der Anhaftung der zweiten Beschichtung (8) auf der Primer-Beschichtung (7), wobei der Aktivierungsschritt vorzugsweise nach dem Verfahrensschritt b. erfolgt.

6. Verfahren nach Anspruch 4 bis 5 **dadurch gekennzeichnet, dass** mindestens ein Aktivierungsschritt mittels UV-Strahlung oder mittels einer Plasmabehandlung erfolgt, wobei das Plasma vorzugsweise aus einem Edelgas, vorzugsweise aus Argon, oder aus Sauerstoff gebildet ist.

7. Verfahren nach Anspruch 4 bis 6, **dadurch gekennzeichnet, dass** der Verfahrensschritt a. durch Einlassen des Perfluorphenylazids in das Behältnis (1) oder durch Einsprühen des Perfluorphenylazids in das Behältnis (1) erfolgt.

8. Verfahren nach Anspruch 4 bis 7, **dadurch gekennzeichnet, dass** der Verfahrensschritt b. mittels energetischer Strahlen, vorzugsweise mittels UV-Strahlen, Laserstrahlen oder Elektronenstrahlen erfolgt.

9. Verfahren nach Anspruch 4 bis 8, **gekennzeichnet durch** die folgenden Verfahrensschritte:
a. Auftragen von PEG/PEO-PPO-Copolymeren, Poly-(3-Methacryloylaminopropyl)-(2-Carboxyethyl)-Dimethylmmonium-Carboxybetain-Methylacrylamid (pCBMAA-1) oder Polypeptid-basierten Blockcopolypeptiden auf die Primer-Beschichtung (7) des Behältnisses (1),
b. Behandlung des gemäß Verfahrensschritt a. aufgetragenen Stoffes, mittels energetischer Strahlen, vorzugsweise mittels UV-Strahlen, Laserstrahlen oder Elektronenstrahlen, wodurch eine untrennbar mit der Primer-Beschichtung (7) verbundene Beschichtung (8) erzeugt wird.

10. Verfahren nach Anspruch 9, **dadurch gekennzeichnet, dass** eine Bindung der zweiten Beschichtung umfassend PEG/PEO-PPO-Copolymere mittels Isozynatgruppen der PEG/PEO-PPO-Copolymere an die funktionelle Gruppe des Perfluorphenylazids erfolgt.

11. Verfahren nach Anspruch9 oder 10, **dadurch gekennzeichnet, dass** der Verfahrensschritt a. durch Einlassen des Stoffes in das Behältnis (1) oder durch Einsprühen des Stoffes in das Behältnis (1) erfolgt.

## Claims

1. Container (1) for storing a bodily fluid, in particular a blood collection tube (2), having an interior space (4) for accommodating the bodily fluid and a wall (5) enclosing the interior space (4), wherein a surface of the wall (5) facing the interior space (4) of the container (1) forms a contact surface (6), the contact surface (6) being at least partially provided with a primer coating (7), the primer coating (7) being formed from a perfluorophenyl azide (PFPA) having an azide group (9) and a functional group (10),
**characterized in that**
a copolymer of poly(N-vinylamine-co-N-vinyl acetamide) is bonded to the functional group (10) of the primer coating (7).

2. Container (1) according to Claim 1, **characterized in that** the container (1) is formed from a plastic, preferably polypropylene (PP), polystyrene (PS), polyethylene (PE), poly(methyl methacrylate) (PMMA), polyamide (PI), or from glass.

3. Container according to Claim 1 or 2, **characterized by** a second coating (8), comprising
a. PEG/PEO-PPO copolymers,
b. Poly-(3-Methacryloylamino Propyl)-(2-Carboxyethyl)-Dimethylmmonium-Carboxybetaine-Methylacrylamide (pCBMAA-1) or
c. Polypeptide-based block copolypeptides,
wherein the second coating (8) is bonded with the primer coating (7).

4. Method for coating a contact surface (6) of a container (1) for storing a bodily fluid, **characterized by** the following method steps:
a. Applying a primer coating formed from a perfluorophenyl azide (PFPA) having an azide group (9) and a functional group (10) to the contact surface (6) of the container (1), wherein a copolymer of poly(N-vinylamine-co-N-vinyl acetamide) is bonded to the functional group (10) of the primer coating (7),
b. Treating the primer coating which has been applied according to method step a., so that the azide group (9) of the perfluorophenyl azide bonds with the contact surface (6) of the container (1), thereby creating a coating (7) that is bonded inseparably with the contact surface (6).

5. Method according to Claim 4, **characterized by** an activation step for improving the adhesion of the primer coating (7) to the contact surface (6) of the container (1), wherein the activation step preferably takes place before method step a., and/or by an activation step for improving the adhesion of the second coating (8) to the primer coating (7), wherein the activation step preferably takes place after method step b.

6. Method according to Claim 4 to 5, **characterized in that** at least one activation step is performed with UV radiation or by means of a plasma treatment, wherein the plasma is preferably formed from an inert gas, preferably argon, or from oxygen.

7. Method according to any of Claims 4 to 6, **characterized in that** the method step a. is carried out by feeding the perfluorophenyl azide into the container (1) or by spraying the perfluorophenyl azide into the container (1) .

8. Method according to any of Claims 4 to 7, **characterized in that** method step b. is carried out by means of energy beams, preferably by means of UV beams, laser beams or electron beams.

9. Method according to any of Claims 4 to 8, **characterized by** the following method steps:
a. Applying PEG/PEO-PPO copolymers, poly-(3-Methacryloylamino Propyl)-(2-Carboxyethyl)-Dimethylmmonium-Carboxybetaine-Methylacrylamide (pCBMAA-1) or polypeptide-based block copolypeptides to the primer coating (7) of the container (1),
b. Treating the substance which has been applied according to method step a., preferably by means of UV beams, laser beams or electron beams, thereby creating a coating (8) which is bonded inseparably with primer coating (7).

10. Method according to Claim 9, **characterized in that** the second coating comprising PEG/PEO-PPO copolymers is bonded with the functional group of the perfluorophenyl azide via isocyanate groups of the PEG/PEO-PPO copolymers.

11. Method according to Claim 9 or 10, **characterized in that** the method step a. is carried out by feeding the substance into the container (1) or by spraying the substance into the container (1).

## Revendications

1. Récipient (1) pour la conservation d'un liquide corporel, en particulier un tube de prélèvement sanguin (2), avec un compartiment intérieur (4) pour placer le liquide corporel et une paroi (5) entourant le compartiment intérieur (4), sachant qu'une surface de la paroi (5), tournée vers le compartiment intérieur (4) du récipient (1), forme une surface de contact (6), sachant que la surface de contact (6) est dotée au moins en partie d'un revêtement de fond (7), sachant que le revêtement de fond (7) est formé d'un phénylazide perfluoré (PFPA) avec un groupe azide (9) et un groupe fonctionnel (10)
**caractérisé en ce qu'**
un copolymère de poly(N-vinylamine-co-N-vinyle acétamide) est relié au groupe fonctionnel (10) du revêtement de fond (7).

2. Récipient (1) selon la revendication 1, **caractérisé en ce que** le récipient (1) est formé en matière plastique, de préférence de polypropylène (PP), de polystyrol (PS), de polyéthylène (PE), de polyméthylméthacrylate (PMMA), de polyimide (PI) ou de verre.

3. Récipient selon la revendication 1 ou 2, **caractérisé en ce qu'**un deuxième revêtement (8) comprenant
a. des copolymères PEG/PEO-PPO,
b. du poly-(3-méthacryloylaminopropyl)-(2-carboxyéthyl)-(diméthylmmonium-carboxybétaine-méthylacrylamide (pCBMAA-1) ou
c. des copolypeptides en bloc à base de polypeptide, sachant que le deuxième revêtement (8) est relié au revêtement de fond (7).

4. Procédé de revêtement d'une surface de contact (6) d'un récipient (1) pour la conservation d'un liquide corporel, **caractérisé par** les étapes de procédé suivantes :
a. application d'un revêtement de fond formé d'un phénylazide perfluoré (PFPA) avec un groupe azide (9) et un groupe fonctionnel (10) sur la surface de contact (6) du récipient (1), sachant qu'un copolymère de poly(N-vinylamine-co-N-vinyle acétamide) est relié au groupe fonctionnel (10) du revêtement de fond (7),
b. traitement du revêtement de fond appliqué selon l'étape de procédé a., ce par quoi le groupe azide (9) du phénylazide perfluoré est lié à la surface de contact (6) du récipient (1), un revêtement (7) relié de façon inséparable à la surface de contact (6) étant de ce fait produit.

5. Procédé selon la revendication 4, **caractérisé par** une phase d'activation pour améliorer l'adhérence du revêtement de fond (7) à la surface de contact (6) du récipient (1), sachant que la phase d'activation a lieu de préférence avant l'étape de procédé a. et/ou par une phase d'activation pour améliorer l'adhérence du deuxième revêtement (8) sur le revêtement de fond (7), sachant que la phase d'activation a lieu de préférence après l'étape de procédé b.

6. Procédé selon les revendications 4 à 5, **caractérisé en ce qu'**au moins une phase d'activation a lieu au moyen d'un rayonnement UV ou au moyen d'un traitement au plasma, sachant que le plasma est formé d'un gaz noble, de préférence d'argon ou d'oxygène.

7. Procédé selon les revendications 4 à 6, **caractérisé en ce que** l'étape de procédé a. a lieu par introduction du phénylazide perfluoré dans le récipient (1) ou par pulvérisation du phénylazide perfluoré dans le récipient (1).

8. Procédé selon les revendications 4 à 7, **caractérisé en ce que** l'étape de procédé b. a lieu au moyen de rayonnements énergétiques, de préférence au moyen d'un rayonnement UV, d'un rayonnement laser ou d'un rayonnement électronique.

9. Procédé selon les revendications 4 à 8, **caractérisé par** les étapes de procédé suivantes :
a. application de copolymères PEG/PEO-PPO, de poly-(3-méthacryloylaminopropyl)-(2-carboxyéthyl)-diméthylmmonium-carboxybétaine-méthylacrylamide (pCBMA-1) ou de copolypeptides en bloc à base de polypeptide sur le revêtement de fond (7) du récipient (1),
b. traitement de la matière appliquée conformément à l'étape de procédé a. au moyen de rayonnements énergétiques, de préférence au moyen d'un rayonnement UV, d'un rayonnement laser ou d'un rayonnement électronique, un revêtement (8) relié de façon inséparable au revêtement de fond (7) étant de ce fait produit.

10. Procédé selon la revendication 9, **caractérisé en ce qu'une** liaison du deuxième revêtement comprenant des copolymères PEG/PEO-PPO au groupe fonctionnel du phénylazide perfluoré a lieu au moyen des groupes isocyanates des copolymères PEG/PEO-PPO.

11. Procédé selon la revendication 9 ou 10, **caractérisé en ce que** l'étape de procédé a. a lieu par introduction de la substance dans le récipient (1) ou par pulvérisation de la substance dans le récipient (1).
